# EUROPÄISCHE PATENTSCHRIFT

(11) **EP 1 795 409 B1**
(45) Veröffentlichungstag und Bekanntmachung des Hinweises auf die Patenterteilung: **04.08.2010**
(21) Anmeldenummer: 06025331.7
(22) Anmeldetag: 07.12.2006
(51) Int. Cl.: B60S 3/06, B60S 3/00

(54) **Behandlungsverfahren und Behandlungsanlage für Fahrzeuge, insbesondere Autowaschanlage**
Treatment process and treatment unit for vehicles, in particular a car wash facility
Procédé de traitement et installation de traitement pour véhicules, en particulier installation de lavage automatique de voitures

(30) Priorität: 09.12.2005 DE 202005019418 U
(43) Veröffentlichungstag der Anmeldung: 13.06.2007
(73) Patentinhaber: Otto Christ AG, 87734 Benningen (DE)
(72) Erfinder: Christ, Markus, 87700 Memmingen (DE)
(74) Vertreter: Ernicke, Klaus Stefan

(56) Entgegenhaltungen:
- EP-A- 0 507 757
- WO-A-94/07713
- DE-A1- 4 428 069

## Beschreibung

Die Erfindung betrifft eine Behandlungsanlage für Fahrzeuge, insbesondere eine Autowaschanlage, mit den Merkmalen im Oberbegriff des Hauptanspruchs.

Eine derartige Autowaschanlage ist aus der EP 0 507 757 A1 bekannt. Sie weist ein Portal mit horizontalen Hochdruckdüsen im Dachbereich und vertikalen oder schrägen Seitendüsen auf, die in Anpassung an die Fahrzeugkontur relativ zum Fahrzeug zugestellt und entlang des Fahrzeugs bewegt werden. Hierfür ist eine Erfassungseinrichtung für die Fahrzeugkontur vorhanden. Für die horizontalen Hochdruckdüsen im Dachbereich wird die zweidimensionale Höhenkontur des Fahrzeugs mit Lichtschranken erfasst. Für die Seitendüsen wird eine Abstandsmessung zur Seitenwand des Fahrzeugs mit einer Ultraschalleinrichtung eingesetzt. Die Lichtschranken und die Ultraschalleinrichtungen erfassen unterschiedliche Stellen der Fahrzeugoberfläche.

Die WO 94/07713 A1 befasst sich mit der Radwäsche in einer Autowaschanlage, welche mittels einer mehrachsig beweglichen Düse erfolgt. Hierbei werden die Vorderräder des Fahrzeugs und die Fahrzeugposition in der Autowaschanlage sowie die Position der Waschbürsten und der Dachtrockendüse gegenüber dem Fahrzeug durch Fotozellen erfasst. Die Position und Winkelstellung der Radwaschdüse wird durch einen Gelenkmechanismus und eine Drehscheibe bestimmt, deren Winkelposition durch einen anderen Sensor erfasst wird.

Andere Autowaschanlagen sind aus der Praxis bekannt. Sie bestehen aus ein oder mehreren Portalen mit darin angeordneten Behandlungsaggregaten, z.B. Waschbürsten, Hochdruckwascheinrichtungen, Trockeneinrichtungen etc., die in Anpassung an die Fahrzeugkontur relativ zum Fahrzeug zugestellt und entlang des Fahrzeugs bewegt werden sollen. Hierfür ist eine Erfassungseinrichtung für die Fahrzeugkontur vorhanden. In der Praxis gibt es verschiedene Ausführungsformen. Einerseits ist eine Konturenerfassung über den Anpressdruck von Waschbürsten möglich. Ferner ist es bekannt, vor Autowaschanlagen eine stationäre Lichtschranke anzuordnen und die Höhenkontur des vorbeifahrenden Fahrzeugs aufzunehmen. Allen vorbekannten Erfassungseinrichtungen ist gemeinsam, dass sie nur in einem begrenzten Umfang die relevanten Formmerkmale am Fahrzeug aufnehmen können.

Die DE 44 28 069 A1 zeigt einen Großmanipulator für die Reinigung von Flugzeugen, Schiffen und anderen Großobjekten, der mehrere gelenkig verbundene Ausleger mit einer Kamera auf einem LKW-Fahrgestell aufweist.

Es ist Aufgabe der vorliegenden Erfindung, eine verbesserte Erfassungstechnik und eine damit ausgerüstete Behandlungsanlage aufzuzeigen.

Die Erfindung löst diese Aufgabe mit den Merkmalen im Verfahrens- und Vorrichtungshauptanspruch.

Die Ausbildung der Erfassungseinrichtung als Scaneinrichtung zum dreidimensionalen Abtasten und Erfassen der Fahrzeugoberfläche erlaubt es, alle für die Behandlung erforderlichen oder nützlichen Formmerkmale des Fahrzeugs zu erfassen und zu verarbeiten. Insbesondere kann eine dreidimensionale Hüllfläche oder Hüllkontur des Fahrzeugs aufgenommen werden. Vorteilhafterweise genügt hierfür eine einzelne Scaneinrichtung, die ggf. mehrere Scannerköpfe umfassen kann.

Die Fahrzeugoberfläche kann mit der Scaneinrichtung berührungsfrei und damit ohne u.U. schädliche Einwirkungen auf das Fahrzeug abgetastet werden. Das Scannen der Fahrzeugoberfläche kann sehr schnell geschehen, was in einem separaten relativen Bewegungslauf zwischen Portal und Fahrzeug erfolgen kann. Alternativ kann die Fahrzeugoberfläche während der Fahrzeugbehandlung durch eine voreilende Anordnung der Scaneinrichtung abgetastet werden.

Für das Scannen der Fahrzeugoberfläche gibt es verschiedene technische Möglichkeiten. In der bevorzugten Ausführungsform findet eine Abstandsmessung mit ein oder mehreren Messstrahlen statt, die von der Scaneinrichtung zum Fahrzeug emittiert und vom Auftreffpunkt reflektiert werden. Die Abstandsmessung bietet eine hohe Messpräzision und eine gute Auflösung. Besonders geeignet sind hierbei Messstrahlen mit geringer Divergenz, insbesondere Laserstrahlen.

Mit der Scaneinrichtung können die räumlichen Positionen des Abtast- oder Auftreffpunkte des Messstrahls dreidimensional erfasst werden. Vorbekannte Erfassungseinrichtungen, z.B. die stationären oder mitbewegten Lichtschranken, erlauben nur eine zweidimensionale Konturenerfassung, z.B. von der Höhen- oder Seitenkontur eines Fahrzeugs. Etwaigen Schiefstellungen oder seitlich vorspringende Teile des Fahrzeugs müssen mit einer anderen Einrichtung separat erfasst werden, was einen großen Rechen- und Zuordnungsaufwand sowie Erfassungsunsicherheiten mit sich bringt. Die dreidimensional messende Scaneinrichtung vermeidet diese Nachteile.

Ferner ist es vorteilhaft, wenn die Scaneinrichtung einen oder mehrere winkelbewegliche Messstrahlen emittiert, wobei die Abstandsmessung in Abhängigkeit vom gleichzeitig ein- oder mehrachsig erfassten Austrittswinkel stattfindet. Über beide Messwerte kann in einfacher und schneller Weise die dreidimensionale Position des jeweiligen Auftreffpunktes an der Fahrzeugoberfläche ermittelt und gespeichert werden.

Der Messbereich der Scaneinrichtung kann erweitert werden, indem zusätzlich der Relativweg zum Fahrzeug aufgenommen und zur Lokalisierung der Auftreffpunkte herangezogen wird. Die Winkelbewegung des Laserstrahls kann dadurch einachsig sein, wobei ebene Scanfelder gebildet werden und bei der Relativbewegung über das Fahrzeug wandern. Hierbei lassen sich auch Sichtschatten vermeiden.

Aus der Vielzahl der gemessenen Auftreffpunkte ergibt sich die besagte dreidimensionale Hüllform oder Oberflächenform des erfassten Fahrzeugs. Man kann die Hüllform auch als dreidimensionales Fahrzeugprofil oder als dreidimensionale Fahrzeugkontur bezeichnen. Die räumliche Form und Position des Fahrzeugs in der Behandlungsanlage kann für das gesamte Fahrzeug, insbesondere über seine gesamte Länge, oder nur für behandlungsrelevante Teilbereiche erfasst werden.

Entsprechend dieser gespeicherten Oberflächenform und Fahrzeugposition können ein oder mehrere Behandlungsaggregate mit optimaler Präzision an das Fahrzeug zugestellt und beim Behandlungsprozess, insbesondere beim Wasch- und/oder Trockenprozess, relativ zum Fahrzeug bewegt werden.

Die beanspruchte Scaneinrichtung mit zwei drehbeweglichen Scannerköpfen hat den Vorteil einer besonders einfachen, robusten und kostengünstigen Ausführungsform. Die beiden Scannerköpfe sind dabei vorzugsweise in Fahrtrichtung des Portals bzw. des Fahrzeugs hintereinander mit Abstand angeordnet, was gegenseitige Störungen ausschließt. Mit den wandernden Messstrahlen oder Laserstrahlen beider seitlich beabstandeter Laserköpfe können die Seitenflächen des Fahrzeugs und auch die Flächen an der Fahrzeugoberseite, d.h. im Dachbereich, an der Motorhaube, den Front- und Heckfenstern sowie dem Kofferraumdeckel erfasst werden. Diese Flächen an der Fahrzeugoberseite werden von beiden Messstrahlen abgetastet, so dass durch einen gegenseitigen Vergleich der hieraus ermittelten Positionen der Auftreffpunkte eine gegenseitige Absicherung und Kalibrierung der Messergebnisse und der Scannerköpfe möglich ist.

Die beanspruchte Scanneinrichtung kann in neuen Behandlungsanlagen integriert sein. Sie kann alternativ an vorhandenen Behandlungsanlagen nachgerüstet und ggf. gegen andere vorhandene Erfassungseinrichtungen ausgetauscht werden. Die beanspruchte Scaneinrichtung hat den Vorteil einer wesentlich komplexeren und präziseren Erfassung der Fahrzeugoberfläche, wobei die Messergebnisse auch qualitativ besser als bei den vorbekannten Erfassungseinrichtungen sind.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Stirnansicht einer Behandlungsanlage für Fahrzeuge mit einem Portal und einer Scaneinrichtung,
- Figur 2:: eine Seitenansicht der Behandlungsanlage von Figur 1,
- Figur 3:: eine Darstellung der Scanfelder der Scanneinrichtung von Figur 1 und
- Figur 4:: eine Darstellung des Messprinzips zur Ermittlung der dreidimensionalen Position der erfassten Punkte an der Fahrzeugoberfläche.

Die Erfindung betrifft eine Behandlungsanlage (1) für Fahrzeuge (2), die mit einer Erfassungseinrichtung (3) in Form einer Scaneinrichtung (7) zum dreidimensionalen Abtasten und Erfassen der Fahrzeugoberfläche ausgerüstet ist. Die Erfindung betrifft außerdem diese Scaneinrichtung (7), die an vorhandenen Behandlungsanlagen (1) im Wege der Nachrüstung oder Umrüstung angebaut werden kann.

Die Behandlungsanlage (1) kann von beliebiger Bauart und Größe sein. Es kann sich um eine Autowaschanlage oder um eine Polieranlage handeln. Diese Anlagentypen können ihrerseits wieder beliebig als Portalanlage mit ein oder mehreren relativ zum stehenden Fahrzeug (2) beweglichen Portalen (4) ausgebildet sein. Alternativ ist eine Taktanlage mit mehreren Portalen möglich, wobei das Fahrzeug (2) zwischen den Portalstationen mit Eigenantrieb bewegt wird. Als weitere Variante kann eine Autowaschstraße mit mehreren stationären oder begrenzt beweglichen Portalen vorgesehen sein, in der die Fahrzeuge (2) mittels einer geeigneten Schleppeinrichtung, z.B. einer Schleppkette, durch die Straße transportiert werden. Daneben sind beliebige andere Bauformen möglich.

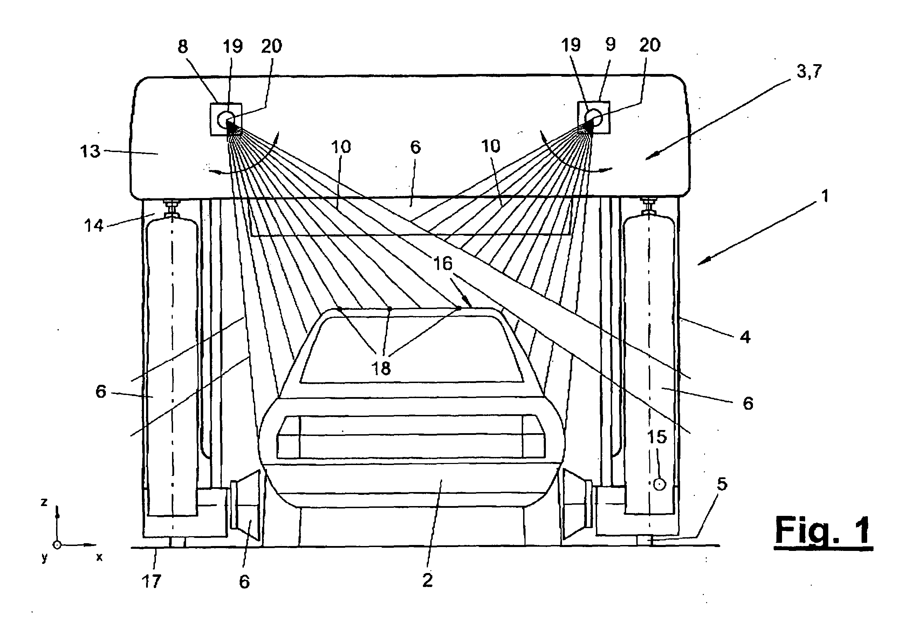

In der in Figur 1 gezeigten Behandlungsanlage (1) sind ein oder mehrere Portale (4) oder andere geeignete Trageinrichtungen vorhanden. Die Behandlungsanlage (1) weist ein oder mehrere Behandlungsaggregate (6) auf, die z.B. am Portal (4) angeordnet sind. Diese Behandlungsaggregate (6) können z.B. die in Figur 1 schematisch angedeuteten vertikalen Seitenbürsten sowie die Radwaschbürsten und auch ein oder mehrere horizontale Dachbürsten sein. Zu den Behandlungsaggregaten (6) können ferner z.B. Auftragvorrichtungen für fluidische Substanzen, insbesondere Spülwasser, Reinigungsmittel, Schaum etc. sowie evtl. Hochdruckwascheinrichtungen und auch Trockeneinrichtungen zählen. Die Art, Zahl und Ausbildung der Behandlungsaggregate (6) ist beliebig wählbar und richtet sich auch danach, ob es sich um eine Waschanlage oder Polieranlage handelt.

Ein oder mehrere Behandlungsaggregate (6) können vorzugsweise mittels einer geeigneten Zustelleinrichtung (nicht dargestellt) in eine Arbeits- oder Behandlungsposition an das Fahrzeug (2) zugestellt werden. Die Zustelleinrichtung kann in einer nach der räumlichen Fahrzeug- oder Karosserieform und Fahrzeugposition optimierten Weise geschehen. Z.B. können der lokale Abstand und/oder die Ausrichtung einer Hochdruck- oder Trockendüse, einer Waschbürste oder eines anderen Behandlungsaggregats (6) nach der Form des momentan beaufschlagten Fahrzeugbereichs behandlungsgünstig optimiert werden. Die räumliche Form des Fahrzeugs (2) meint z.B. den Ort, die Ausrichtung und die Krümmung der beaufschlagten Fahrzeugflächen.

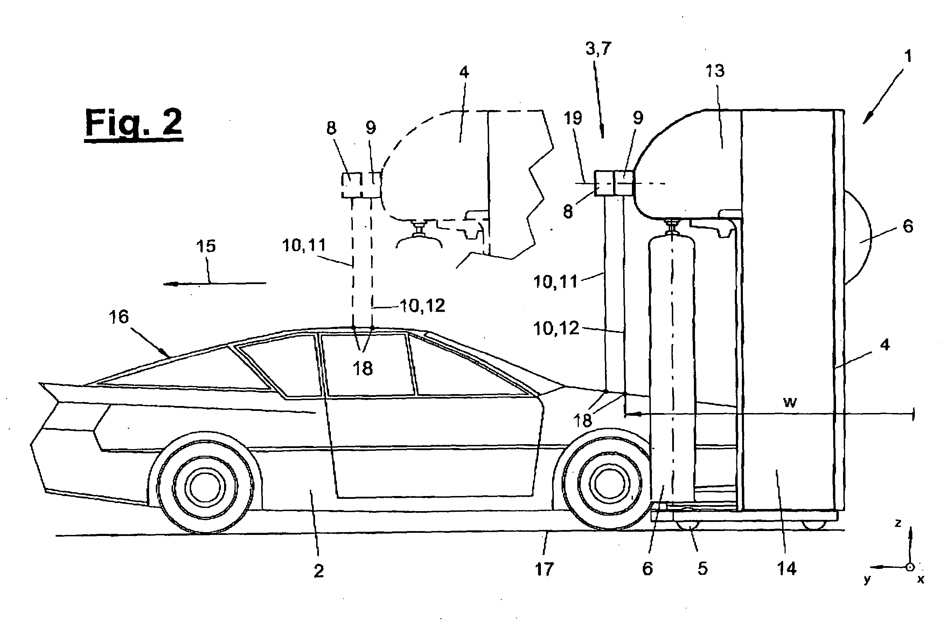

Die Behandlungsanlage (1) besitzt eine Erfassungseinrichtung (3) für mehrere Formmerkmale des Fahrzeugs (2), welche als Scaneinrichtung (7) zum dreidimensionalen Abtasten und Erfassen der Fahrzeugoberfläche ausgebildet ist. Die Scaneinrichtung (7) ist vorzugsweise am Portal (4) angeordnet, kann sich ansonsten aber an jeder beliebigen anderen geeigneten Stelle befinden. In der gezeigten Ausführungsform ist die Scaneinrichtung (7) am Portal (4) oberhalb des Fahrzeugs (2) angeordnet und befindet sich stationär am horizontalen Querjoch (13) des Portals (4). Alternativ ist eine Anordnung im oberen Bereich der vertikalen Ständer oder Säulen (14) des Portals (4) möglich. In der gezeigten Ausführungsform ist außerdem das Portal (4) in der in Figur 2 durch einen Pfeil verdeutlichten Fahrtrichtung (15) relativ zum vorzugsweise stehenden Fahrzeug (2) verfahrbar angeordnet.

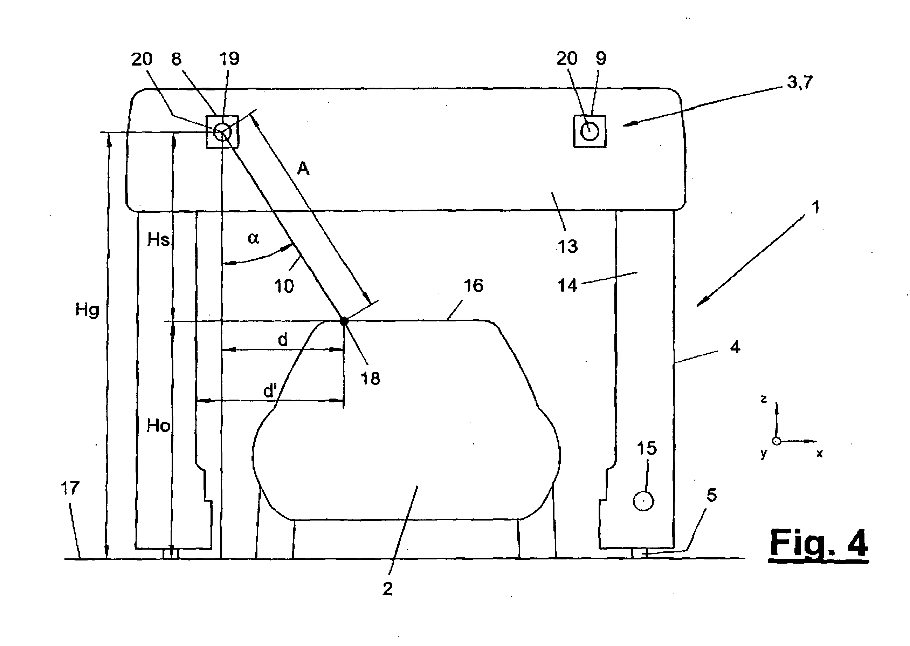

Die Scaneinrichtung (7) ist als Abstandsmesseinrichtung ausgebildet. Sie emittiert mindestens einen z.B. eng gebündelten Messstrahl (10) zum Fahrzeug (2), der z.B. vom Auftreffpunkt (18) an der Fahrzeugoberfläche zumindest teilweise reflektiert und zur Scaneinrichtung (7) und einem dort angeordneten oder integrierten Empfänger zurückgeworfen wird. Vorzugsweise ist der Messstrahl ein Laserstrahl. Die Abstandsmessung erfolgt z.B. durch eine Zeitmessung zwischen der Emission des Messstrahls (10) und dem Eintreffen des reflektierten Messstrahls (10) am Empfänger. Das genannte Abstandsmessverfahren über die Zeitmessung wird als Time-of-Flight-Verfahren bezeichnet und basiert auf der Konstanz der Lichtgeschwindigkeit c. Über die verstrichene Zeit kann der Weg und somit der Abstand (A) des Auftreffpunkts (18) von der Strahlemissionsstelle der Scaneinrichtung (7) berechnet werden. Der Messablauf ist in Figur 4 dargestellt und wird nachfolgend im einzelnen beschrieben. Die Strahlemissionsstelle kann z.B. den nachfolgend genannten Scannerbezugspunkt (20) bilden.

In der gezeigten Ausführungsform wird von der Scaneinrichtung (7) mindestens ein winkelbeweglicher Messstrahl (10) emittiert, der z.B. um eine in Fahrtrichtung (15) sich erstreckende Achse um z.B. ca 90° zwischen der Vertikalen und der Horizontalen-pendelt und in einer Scanebene oder einem Scanfeld (11,12) quer zur Fahrtrichtung (15) quer über das Fahrzeug hin und her wandert.

Hierbei wird gleichzeitig mit der Abstandsmessung der zugehörige Austrittswinkel (α) gegen die Vertikale oder eine andere Bezugslinie gemessen. Aus dem Abstand (A) und dem Austrittswinkel (α) können für jeden Auftreffpunkt (18) an der Fahrzeugoberfläche die Positionskoordinaten in der Höhe und in der Breite bzw. in der z- und x-Achse eines Anlagen-Koordinatensystems ermittelt und gespeichert werden. Figur 1 verdeutlicht diese Achszuordnung.

Aus den gespeicherten Positionskoordinaten der Oberflächenpunkte ergibt sich ein dreidimensionales Modell der abgetasteten Fahrzeugoberfläche und ihrer Position in der Behandlungsanlage (1). Dieses Modell kann zur Steuerung der Behandlungsanlage (1) und insbesondere der Behandlungsaggregaten (6) herangezogen werden.

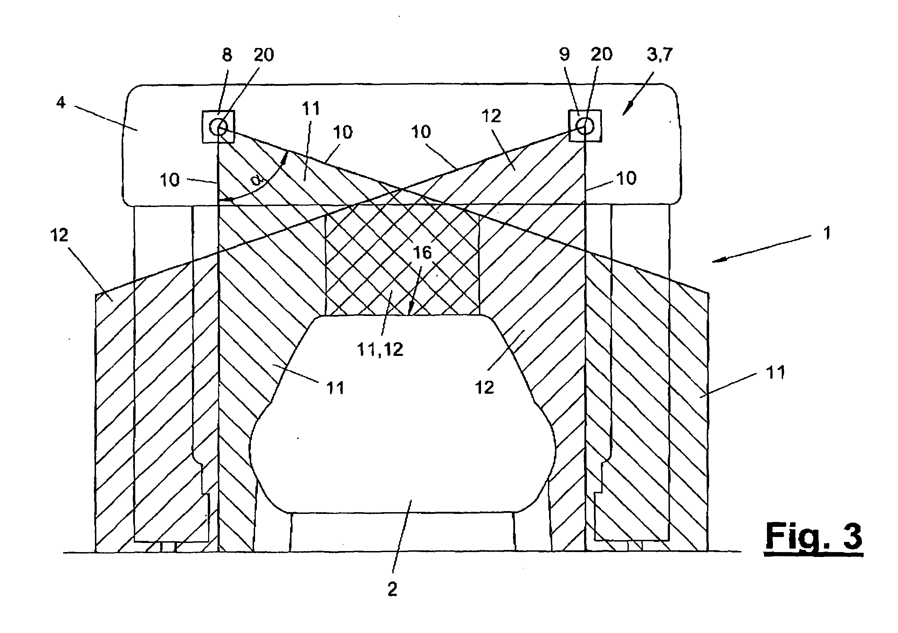

Die Scaneinrichtung (7) umfasst im gezeigten Ausführungsbeispiel zwei Scannerköpfe (8,9) oder sog. Laserscanner, die beide oberhalb des Fahrzeugs (2) und nach links bzw, rechts seitlich versetzt zum Fahrzeug (2) angeordnet sind. Jeder Scannerkopf (8,9) emittiert einen winkelbeweglichen Messstrahl (10). Durch die seitlich versetzte Anordnung außenseitig neben dem Fahrzeug (2) erreichen die Messstrahlen (10) die Oberseite des Fahrzeugs (2) und auch die dem jeweiligen Scannerkopf (8,9) zugewandten Seitenflächen des Fahrzeugs (2). Figur 3 verdeutlicht die zugehörigen Scanfelder (11,12).

Hieraus ist auch ersichtlich, dass die Oberseiten (16) des Fahrzeugs (2), d.h. die oben liegenden Flächen am Dach, an der Front- und Heckscheibe sowie an Motorhaube und Kofferraumdeckel von beiden Scannerköpfen (8, 9) erfasst werden, Um gegenseitige Störungen der Scanfelder (11,12) und der dort sich bewegenden Messstrahlen (10) auszuschließen, ist es vorteilhaft, die Scanköpfe (8,9) in Fahrtrichtung (15) versetzt zueinander anzuordnen. Hierdurch ergeben sich parallele und einander nicht störende Scanfelder (11,12) der Messstrahlen (10). Figur 2 verdeutlicht diese Anordnung. Durch die gemeinsame Abtastung der Oberseite (6) des Fahrzeugs (2) können außerdem die Messwerte oder Positionswerte der dortigen gemeinsam erfassten Auftreffpunkte (18) miteinander verglichen werden. Über den Messwertvergleich können die Scannerköpfe (8, 9) untereinander abgeglichen und kalibriert werden. Außerdem lassen sich eventuelle Scannerfehler frühzeitig erfassen und korrigieren.

Die Drehbeweglichkeit der Messstrahlen (10) kann auf unterschiedliche Weise erzeugt werden. In der gezeigten Ausführungsform sind die Scaneinrichtung (7) bzw. deren zwei Scannerköpfe (8,9) drehbeweglich am Portal (4) angeordnet. Sie haben hierzu eine in Fahrtrichtung (15) ausgerichtete Drehachse (19) und einen steuerbaren Antrieb. Außerdem ist ein Winkelgeber vorhanden, der die Drehstellung und somit deren Austrittswinkel (α) des Messstrahls (10) im Vergleich zu einer Bezugslinie, z.B. der Vertikalen, aufnimmt.

Alternativ kann eine Scaneinrichtung (7) bzw. können Scannerköpfe (8,9) Verwendung finden, die stationär am Portal (4) angeordnet sind und durch eine interne Drehbeweglichkeit den Messstrahl (10) oder Laserstrahl pendeln oder umlaufend rotieren lassen. Bei einer umlaufenden Rotation kann der gewünschte Strahlaustrittsbereich durch eine verstellbare Blendenöffnung freigegeben ist. Bei dieser Ausführung wird der Austrittswinkel (α) scannerintern erfasst.

Figur 4 verdeutlicht die Methode zur Ermittlung der räumlichen Positionskoordinaten aller erfassten Auftreffpunkte (18). Aus der Abstandsmessung des jeweiligen Scannerkopfes (8,9) wird der Abstand (A) vom Auftreffpunkt (18) zum Scannerbezugspunkt (20) gemessen. Zugleich wird der zugehörige Auslenkwinkel (α) des Messtrahls (10) gegenüber der durch den Scannerbezugspunkt (20) gehenden Vertikalen gemessen. Die Gesamthöhe (Hg) des Scannerbezugspunktes (20) gegenüber dem Boden (17) bzw. der Standfläche des Fahrzeugs (2) ist bekannt. Aus dem Abstand (A) und dem cos (α) kann die Höhe (Hs) des Auftreffpunkts (18) vom Scannerbezugspunkt (20) berechnet werden. Aus Subtraktion der Höhe (Hs) von der Gesamthöhe (Hg) ergibt sich die Höhe (Ho) des Auftreffpunkts (18) vom Boden (17).

Der Seitenabstand (d) des Auftreffpunkts (18) vom Scannerbezugspunkt (20) ergibt sich aus dem Abstand (A) und dem sin (α). Hieraus errechnet sich auch der Seitenabstand (d') des Auftreffpunkts (18) von einer Bezugslinie, z.B. der Ausgangsposition der Seitenbürsten (6) der Seitentrocknungsdüsen etc.

Das Scannen des Fahrzeugs (2) mit den Scanfeldern (11,12) erfolgt in Verbindung mit einer Fahrbewegung des Portals (4). Das Scannen kann während der Fahrbewegung stattfinden, wobei die Scanfelder (11,12) mitwandern. Alternativ kann das Portal (4) schrittweise bewegt werden, wobei das Scannen in den Standpausen erfolgt. Beim Scannen wird zugleich der Fahrweg (w) des Portals (4) bzw. die aktuelle Position des Scannerbezugspunkts (20) in der Fahrtrichtung (15) und in der y-Achse von einem Bezugspunkt, insbesondere der Ruhestellung des Portals (4), mit einem geeigneten Messinstrument, z.B. einem Weggeber, einem Abstandsmesser oder dgl., aufgenommen und den Scan-Messwerten zugeordnet.

Die dreidimensionalen Orts-Koordinaten der Auftreffpunkte (18) in x-, y- und z-Richtung gegenüber einem räumlich ortsfesten, vorzugsweise kartesischen Koordinatensystem ergeben sich aus den Werten für den Fahrweg (w) und die Höhe (Ho) sowie dem Seitenabstand (d) unter Berücksichtigung der in diesem Koordinatensystem bekannten Position der Scannerbezugspunkte (20) beider Scannerköpfe (8,9) und des hieraus sich ergebenden Translationsvektors zum Koordinatenursprung.

Die dreidimensionalen Orts-Koordinaten der verschiedenen Auftreffpunkte (18) können in einer geeigneten Steuerung berechnet und für die nachfolgende Auswertung gespeichert werden. Aus der Vielzahl der Auftreffpunkte (18) und ggf. deren rechnerische Verbindung ergibt sich eine räumliche Hülloberfläche des Fahrzeugs (2). Die Steuerung kann in die Scaneinrichtung (7) integriert sein. Alternativ kann hierfür die Steuerung (nicht dargestellt) der Behandlungsanlage (1) herangezogen werden.

Mit der Scaneinrichtung (7) können Teile oder die gesamte, für die Behandlung relevante Oberfläche des Fahrzeugs (2) erfasst werden. Alternativ können Teile der Oberfläche erfasst werden, wobei die hierbei gewonnene Hüllform mit in der Steuerung gespeicherten Karosserieformen bekannten Fahrzeugtypen verglichen wird. Wenn ein bekannter Fahrzeugtyp über den Vergleich identifiziert werden kann, können aus diesen die für die Konturensteuerung der Behandlungsaggregate (6) oder für andere Zwecke relevanten Formmerkmale und Konturendaten aus einem Speicher ausgelesen und verarbeitet werden, wobei über die Scaneinrichtung noch die tatsächliche Position und Ausrichtung des Fahrzeugs innerhalb der Parkstellung in der Behandlungsanlage (1) beigesteuert wird. Der Scanvorgang kann nach dieser Identifizierung abgebrochen werden. Erfolgt keine Identifizierung, wird der Scanvorgang bis zum vorgesehenen Ende fortgesetzt.

Abwandlungen der gezeigten Ausführungsform sind in verschiedener Weise möglich. In einer Autowaschstraße ist z.B. die Scaneinrichtung (7) an einem stationären Portal (4) angeordnet und tastet das mit der Schleppeinrichtung vorbeibewegte Fahrzeug ab. Statt des Portalwegs w wird in diesem Fall der Schleppweg des Fahrzeugs erfasst. Die Fahrzeugposition kann über die Scanerfassung des vordersten Fahrzeugteils, z.B. der vorderen Stoßstange, oder über die Abtastung und Erkennung typischer Fahrzeugteile, wie Vorderrad etc. erfolgen. Die einmal gewonnenen Vornerfassungsdaten des Fahrzeugs (2) können innerhalb der Waschstraße von Station zu Station zur Steuerung der dortigen Behandlungsaggregate oder für andere Zwecke weitergereicht werden. Das gleiche kann auch in einer Taktanlage, in einer Doppelportalanlage oder dgl. geschehen.

Ferner sind Abwandlungen der Scaneinrichtung (7) möglich. Die Scaneinrichtung (7) kann an anderer Stelle der Behandlungsanlage (1) angeordnet sein und z.B. das einfahrende Fahrzeug (2) bei der Einfahrbewegung abtasten. Die Scaneinrichtung (7) kann ferner am Hallendach in zentraler Position über der vorgesehenen Parkstellung des Fahrzeugs (2) in der Behandlungsanlage (1) angeordnet sein. Alternativ ist eine Anordnung der Scaneinrichtung (7) an einem vom stehenden oder fahrenden Portal (4) in Fahrtrichtung (15) ausfahrbaren Ausleger möglich. In diesen Fällen kann ein einzelner Scannerkopf vorhanden sein, der ein oder mehrere Messstrahlen (10) mit mehrachsiger Winkelbeweglichkeit emittiert. Ferner können mehrere Scannerköpfe nebeneinander und ggf. starr angeordnet sein, die mehrere Messstrahlen nach unten emittieren, die einen Strahlenvorhang ähnlich dem vorbeschriebenen ebenen Scanfeld bilden.

Ferner kann die Scaneinrichtung mit ihrem ein- oder mehrfach vorhandenen Messstrahl (10) die Auftreffpunkte (18) am Fahrzeug auch auf andere Weise als über eine Abstandsmessung erkennen. Dies kann z.B. eine Reflektionsmessung mit entsprechend im Abstand und z.B. seitlich positionierten Empfängern sein. Außerdem ist ein Laserlichtsehnittverfahren zur Erzeugung von Profilschnitten möglich, wie es in der Archäologie angewandt wird. Hierbei werden zwei Lichtquellen (z.B. rotes Laserlicht), die eine Lichtebene projizieren, feststehend positioniert und dabei so angeordnet, dass die beiden aufgespalteten Lichtebenen ineinander übergehen und somit eine einzige Ebene aufspannen. Das aufgespaltete Licht erzeugt beim Auftreffen auf die Objektoberfläche eine Schnittlinie. Werden die Laser genau gegenüberliegend montiert, entsteht rund um das Objekt eine einzige durchgehende Schnittlinie, die z.B. von zwei CCD-Kameras aufgenommen wird. Beide Kameras müssen sich in einem genau definierten Abstand zur Lichtquelle befinden, damit eine Koordinatenrückrechnung möglich wird. Die genaue Aufnahmegeometrie wird durch eine Kalibrierung des System ermittelt. Auf Grund der Positionierung der aufgenommenen Laserschnittlinie im Kamerabild und der bekannten Aufnahmegeometrie kann für jeden Punkt der Linie die Entfernung zur Kamera berechnet werden. Durch Verwendung zweier Kameras und Laser wird so ein durchgehender Profilschnitt des Objektes berechnet. Zur Aufnahme und Berechnung des Profilschnittes wird ein Programm eingesetzt, das die notwendigen Arbeitsgänge automatisch durchführt. Bei der Initialisierung des Systems wird die gesamte Aufnahmegeometrie ermittelt. Dabei oder anschließend besteht die Möglichkeit mehrere Profilschnitte pro Sekunde zu berechnen und zur Vermessung des dreidimensionalen Fahrzeugprofils auszuwerten.

### BEZUGSZEICHENLISTE

- 1.: Behandlungsanlage, Autowaschanlage
- 2: Fahrzeug
- 3: Erfassungseinrichtung für Fahrzeugform
- 4: Portal
- 5: Fahrwerk
- 6: Behandlungsaggregat
- 7: Scaneinrichtung
- 8: Scannerkopf, Laserscanner
- 9: Scannerkopf, Laserscanner
- 10: Messstrahl, Laserstrahl
- 11: Scanfeld
- 12: Scanfeld
- 13: Querjoch
- 14: Ständer, Säule
- 15: Fahrtrichtung
- 16: Oberseite, Dachbereich
- 17: Boden
- 18: Auftreffpunkt
- 19: Drehachse Scannerkopf oder Messtrahl
- 20: Scannerbezugspunkt

- α: Strahlwinkel gegen Vertikale
- Hg: Gesamthöhe Scanner vom Boden
- Ho: Höhe Auftreffpunkt vom Boden
- Hs: Höhe Auftreffpunkt zum Scanner
- A: Abstand Auftreffpunkt vom Scanner
- d: Seitenabstand Auftreffpunkt vom Scanner
- d': Seitenabstand Auftreffpunkt von Bezugslinie
- w: Fahrweg des Portals

## Patentansprüche

1. Behandlungsanlage für Fahrzeuge (2), insbesondere Autowaschanlage, mit mindestens einem Portal (4), wobei die Behandlungsanlage (1) eine Erfassungseinrichtung (3) für mindestens ein Formmerkmal des Fahrzeug (2) aufweist und als Scaneinrichtung (7) zum dreidimensionalen Abtasten und Erfassen der Fahrzeugoberfläche ausgebildet ist, **dadurch gekennzeichnet, dass** die Scaneinrichtung (7) mindestens einen Messstrahl (10) zum Fahrzeug (2) emittiert und die räumlichen Positionen der Abtast- oder Auftreffpunkte des Messstrahls (10) an der Fahrzeugoberfläche dreidimensional erfasst.

2. Behandlungsanlage nach Anspruch 1, **dadurch gekennzeichnet, dass** die Scaneinrichtung (7) am Portal (4) oberhalb des Fahrzeugs (2) angeordnet ist.

3. Behandlungsanlage nach Anspruch 1 oder 2, **dadurch gekennzeichnet, dass** die Scaneinrichtung (7) stationär am Portal (4), vorzugsweise am Querjoch (13) des Portals (4), angeordnet ist.

4. Behandlungsanlage nach Anspruch 1, 2 oder 3, **dadurch gekennzeichnet, dass** das Portal (4) verfahrbar angeordnet ist.

5. Behandlungsanlage nach einem der vorhergehenden Ansprüche, **dadurch gekennzeichnet, dass** die Scaneinrichtung (7) als Abstandsmesseinrichtung ausgebildet ist.

6. Behandlungsanlage nach einem der vorhergehenden Ansprüche, **dadurch gekennzeichnet, dass** die Scaneinrichtung (7) einen eng gebündelten Laserstrahl zum Fahrzeug (2) emittiert.

7. Behandlungsanlage nach einem der vorhergehenden Ansprüche, **dadurch gekennzeichnet, dass** die Scaneinrichtung (7) mindestens einen winkelbeweglichen Messstrahl (10) emittiert und den Abstand zum Auftreffpunkt (18) in Abhängigkeit von mindestens einem Austrittswinkel (α) misst.

8. Behandlungsanlage nach einem der vorhergehenden Ansprüche, **dadurch gekennzeichnet, dass** der Messstrahl (10) quer zur Fahrtrichtung (15) des Portals (4) wandert.

9. Behandlungsanlage nach einem der vorhergehenden Ansprüche, **dadurch gekennzeichnet, dass** die Scaneinrichtung (7) bei fahrendem Portal (4) den Abstand zu den Auftreffpunkten (18) des Messstrahls (10) in Abhängigkeit vom Austrittswinkel (α) und vom Fahrweg (w) des Portals (4) misst und hieraus die räumliche Position der Auftreffpunkte (18) und die räumliche Hülloberfläche des Fahrzeugs (2) bestimmt.

10. Behandlungsanlage nach einem der vorhergehenden Ansprüche, **dadurch gekennzeichnet, dass** die Scaneinrichtung (7) mindestens einen Scannerkopf (8,9) mit mindestens einer Bewegungsachse für mindestens einen emittierten Messstrahl (10) aufweist.

11. Behandlungsanlage nach einem der vorhergehenden Ansprüche, **dadurch gekennzeichnet, dass** der Scannerkopf (8,9) um eine längs der Fahrtrichtung (15) ausgerichtete Drehachse (19) schwenkbar gelagert ist.

12. Behandlungsanlage nach einem der vorhergehenden Ansprüche, **dadurch gekennzeichnet, dass** die Scaneinrichtung (7) mindestens zwei Scannerköpfe (8,9) aufweist, die mit Abstand über und beidseits neben dem Fahrzeug (2) angeordnet sind.

13. Behandlungsanlage nach einem der vorhergehenden Ansprüche, **dadurch gekennzeichnet, dass** die Scannerköpfe (8,9) in Fahrtrichtung (15) versetzt hintereinander angeordnet sind.

14. Behandlungsanlage nach einem der vorhergehenden Ansprüche, **dadurch gekennzeichnet, dass** die wandernden Messstrahlen (10) der beiden seitlich und hintereinander versetzten Scannerköpfe (8,9) zwei parallele Scanfelder (11,12) erzeugen, welche die Oberseite (16) des Fahrzeugs (2) gemeinsam erfassen.

15. Behandlungsanlage nach einem der vorhergehenden Ansprüche, **dadurch gekennzeichnet, dass** die Scaneinrichtung (7) die Messwerte der Scanfelder (11,12) im Bereich des Oberseite (16) des Fahrzeugs (2) gegeneinander abgleicht.

16. Behandlungsanlage nach einem der vorhergehenden Ansprüche, **dadurch gekennzeichnet, dass** die Scaneinrichtung (7) und/oder die Behandlungsanlage (1) eine Steuerung (21) zur Verarbeitung der Messwerte und zur Ermittlung sowie Speicherung der räumlichen Position der Auftreffpunkte (18) sowie der Hüllform des Fahrzeugs (2) aufweisen.

17. Behandlungsanlage nach einem der vorhergehenden Ansprüche, **dadurch gekennzeichnet, dass** die Behandlungsanlage (1) als Portalwaschanlage mit ein oder mehreren Behandlungsaggregaten (6) ausgebildet ist, wobei am Portal (4) ein oder mehrere Behandlungsaggregate (6) entsprechend der erfassten Fahrzeugform in der Höhe und/oder im Abstand zum Fahrzeug (2) positionierbar sind.

18. Behandlungsanlage nach einem der Ansprüche 1 bis 16, **dadurch gekennzeichnet, dass** die Behandlungsanlage (1) als Waschstrasse mit ein oder mehreren Stationen und mit mehreren Behandlungsaggregaten (6) ausgebildet ist, wobei ein oder mehrere Behandlungsaggregate (6) entsprechend der erfassten Fahrzeugform in der Höhe und/oder im Abstand zum Fahrzeug (2) positionierbar sind.

19. Verfahren zum Behandeln von Fahrzeugen (2) in einer Behandlungsanlage (1), insbesondere einer Autowaschanlage, mit mindestens einem Portal (4), wobei mindestens ein Formmerkmal des Fahrzeug (2) mittels einer Erfassungseinrichtung (3) erfasst wird, wobei die Fahrzeugoberfläche mittels einer Scaneinrichtung (7) dreidimensional abgetastet und erfasst wird, **dadurch gekennzeichnet, dass** die Scaneinrichtung (7) mindestens einen Messstrahl (10) zum Fahrzeug (2) emittiert und die räumlichen Positionen der Abtast- oder Auftreffpunkte des Messstrahls (10) an der Fahrzeugoberfläche dreidimensional erfasst.

20. Verfahren nach Anspruch 19, **dadurch gekennzeichnet, dass** die Scaneinrichtung (7) mit mindestens zwei, mit Abstand über und beidseits neben dem Fahrzeug (2) angeordneten Scannerköpfen (8,9) die Fahrzeugoberfläche abtastet.

## Claims

1. Treatment unit for vehicles (2), in particular a car wash unit, with at least one gantry (4), wherein the treatment unit (1) has a detecting device (3) for at least one form feature of the vehicle (2) and is designed as a scanning device (7) for the three-dimensional scanning and detection of the vehicle surface, **characterized in that** the scanning device (7) emits at least one measuring beam (10) towards the vehicle (2) and detects in three dimensions the spatial positions of the scanning or impingement points of the measuring beam (10) on the vehicle surface.

2. Treatment unit according to Claim 1, **characterized in that** the scanning device (7) is arranged on the gantry (4) above the vehicle (2).

3. Treatment unit according to Claim 1 or 2, **characterized in that** the scanning device (7) is arranged in a stationary manner on the gantry (4), preferably on the transverse yoke (13) of the gantry (4).

4. Treatment unit according to Claim 1, 2 or 3, **characterized in that** the gantry (4) is arranged displaceably.

5. Treatment unit according to one of the preceding claims, **characterized in that** the scanning device (7) is designed as a distance-measuring device.

6. Treatment unit according to one of the preceding claims, **characterized in that** the scanning device (7) emits a tightly concentrated laser beam towards the vehicle (2).

7. Treatment unit according to one of the preceding claims, **characterized in that** the scanning device (7) emits at least one angularly movable measuring beam (10) and measures the distance to the impingement point (18) as a function of at least one emergence angle (α).

8. Treatment unit according to one of the preceding claims, **characterized in that** the measuring beam (10) moves transversally to the direction of travel (15) of the gantry (4).

9. Treatment unit according to one of the preceding claims, **characterized in that** when the gantry (4) moves, the scanning device (7) measures the distance to the impingement points (18) of the measuring beam (10) as a function of the emergence angle (α) and of the movement path (w) of the gantry (4) and determines therefrom the spatial position of the impingement point (18) and the spatial envelope surface of the vehicle (2).

10. Treatment unit according to one of the preceding claims, **characterized in that** the scanning device (7) has at least one scanner head (8, 9) with at least one movement axis for at least one emitted measuring beam (10).

11. Treatment unit according to one of the preceding claims, **characterized in that** the scanner head (8, 9) is mounted so as to be pivotable about an axis of rotation (19) oriented along the direction of travel (15).

12. Treatment unit according to one of the preceding claims, **characterized in that** the scanning device (7) has at least two scanner heads (8, 9) which are arranged at a distance above and on both sides next to the vehicle (2).

13. Treatment unit according to one of the preceding claims, **characterized in that** the scanner heads (8, 9) are arranged offset behind one another in the direction of travel (15).

14. Treatment unit according to one of the preceding claims, **characterized in that** the moving measuring beams (10) of the two scanner heads (8, 9) offset laterally and behind one another produce two parallel scanning fields (11, 12) which together detect the upper side (16) of the vehicle (2).

15. Treatment unit according to one of the preceding claims, **characterized in that** the scanning device (7) compares with one another the measured values of the scanning fields (11, 12) in the region of the upper side (16) of the vehicle (2).

16. Treatment unit according to one of the preceding claims, **characterized in that** the scanning device (7) and/or the treatment unit (1) have a controller (21) for processing the measured values and for determining and storing the spatial positions of the impingement point (18) and also the envelope shape of the vehicle (2).

17. Treatment unit according to one of the preceding claims, **characterized in that** the treatment unit (1) is designed as a gantry washing unit with one or more treatment assemblies (6), wherein one or more treatment assemblies (6) can be positioned vertically and/or at a distance to the vehicle (2) on the gantry (4) corresponding to the detected vehicle form.

18. Treatment unit according to one of claims 1 to 16, **characterized in that** the treatment unit (1) is designed as a washing line with one or more stations and with a plurality of treatment assemblies (6), wherein one or more treatment assemblies (6) can be positioned vertically and/or at a distance from the vehicle (2) corresponding to the detected vehicle form.

19. Method for treating vehicles (2) in a treatment unit (1), in particular a car wash unit, with at least one gantry (4), wherein at least one form feature of the vehicle (2) is detected by means of a detecting device (3), wherein the vehicle surface is three-dimensionally scanned and detected by means of a scanning device (7), **characterized in that** the scanning device (7) emits at least one measuring beam (10) towards the vehicle (2) and detects in three dimensions the spatial positions of the scanning or impingement points of the measuring beam (10) on the vehicle surface.

20. Method according to Claim 19, **characterized in that** the scanning device (7) scans the vehicle surface by means of at least two scanner heads (8, 9) which are arranged at a distance above and on both sides next to the vehicle (2).

## Revendications

1. Installation de traitement pour véhicules (2), en particulier installation de lavage de voiture, comprenant au moins un portique (4), l'installation de traitement (1) présentant un dispositif d'enregistrement (3) pour au moins une caractéristique de forme du véhicule (2) et étant conçue comme scanner (7) pour le balayage en trois dimensions et l'enregistrement de la surface du véhicule, **caractérisée en ce que** le scanner (7) envoie au moins un faisceau de mesure (10) au véhicule (2) et enregistre en trois dimensions les positions dans l'espace des points de balayage ou d'impact du faisceau de mesure (10) sur la surface du véhicule.

2. Installation de traitement selon la revendication 1, **caractérisée en ce que** le scanner (7) est disposé sur le portique (4) au-dessus du véhicule (2).

3. Installation de traitement selon la revendication 1 ou 2, **caractérisée en ce que** le scanner (7) est disposé de façon fixe sur le portique (4), de préférence sur la barre transversale (13) du portique (4).

4. Installation de traitement selon la revendication 1, 2 ou 3, **caractérisée en ce que** le portique (4) est disposé de façon coulissante.

5. Installation de traitement selon l'une quelconque des revendications précédentes, **caractérisée en ce que** le scanner (7) est conçu comme dispositif de mesure de distance.

6. Installation de traitement selon l'une quelconque des revendications précédentes, **caractérisée en ce que** le scanner (7) envoie un faisceau laser très resserré au véhicule (2).

7. Installation de traitement selon l'une quelconque des revendications précédentes, **caractérisée en ce que** le scanner (7) envoie au moins un faisceau de mesure (10) mobile en angle et mesure la distance au point d'impact (18) en fonction d'au moins un angle de sortie (α).

8. Installation de traitement selon l'une quelconque des revendications précédentes, **caractérisée en ce que** le faisceau de mesure (10) se déplace transversalement au sens de marche (15) du portique (4).

9. Installation de traitement selon l'une quelconque des revendications précédentes, **caractérisée en ce que** le scanner (7) mesure la distance aux points d'impact (18) du faisceau de mesure (10) en fonction de l'angle de sortie (α) et de la course de déplacement (w) du portique (4) lorsque le portique (4) se déplace et détermine à partir de là la position dans l'espace des points d'impact (18) et la surface enveloppante dans l'espace du véhicule (2).

10. Installation de traitement selon l'une quelconque des revendications précédentes, **caractérisée en ce que** le scanner (7) présente au moins une tête de scanner (8, 9) avec au moins un axe de déplacement pour au moins un faisceau de mesure (10) émis.

11. Installation de traitement selon l'une quelconque des revendications précédentes, **caractérisée en ce que** la tête de scanner (8, 9) est logée de façon pivotante autour d'un axe de rotation (19) orienté le long du sens de déplacement (15).

12. Installation de traitement selon l'une quelconque des revendications précédentes, **caractérisée en ce que** le scanner (7) présente au moins deux têtes de scanner (8, 9) qui sont disposées à distance au-dessus et des deux cotés à côté du véhicule (2).

13. Installation de traitement selon l'une quelconque des revendications précédentes, **caractérisée en ce que** les têtes de scanner (8, 9) sont disposées l'une derrière l'autre de façon décalée dans le sens de marche (15).

14. Installation de traitement selon l'une quelconque des revendications précédentes, **caractérisée en ce que** les faisceaux de mesure (10) qui se déplacent des deux têtes de scanner (8, 9) décalées sur le côté et l'une derrière l'autre génèrent deux champs de balayage (11, 12) parallèles, lesquels enregistrent ensemble le côté supérieur (16) du véhicule (2).

15. Installation de traitement selon l'une quelconque des revendications précédentes, **caractérisée en ce que** le scanner (7) équilibre les valeurs de mesure des champs de balayage (11, 12) dans la zone du côté supérieur (16) du véhicule (2) les unes par rapport aux autres.

16. Installation de traitement selon l'une quelconque des revendications précédentes, **caractérisée en ce que** le scanner (7) et/ou l'installation de traitement (1) présentent une commande (21) pour le traitement des valeurs de mesure et pour le calcul ainsi que pour le stockage de la position dans l'espace des points d'impact (18) et de la forme enveloppante du véhicule (2).

17. Installation de traitement selon l'une quelconque des revendications précédentes, **caractérisée en ce que** l'installation de traitement (1) est conçue sous forme d'installation de lavage à portique avec un ou plusieurs ensembles de traitement (6), un ou plusieurs ensembles de traitement (6) pouvant être positionnés sur le portique (4) dans la hauteur et/ou à distance du véhicule (2) en fonction de la forme du véhicule enregistrée.

18. Installation de traitement selon l'une quelconque des revendications 1 à 16, **caractérisée en ce que** l'installation de traitement (1) est conçue sous forme de chaîne de lavage avec un ou plusieurs postes et avec plusieurs ensembles de traitement (6), un ou plusieurs ensembles de traitement (6) pouvant être positionnés dans la hauteur et/ou à distance du véhicule (2) en fonction de la forme du véhicule enregistrée.

19. Procédé pour le traitement de véhicules (2) dans une installation de traitement (1), en particulier une installation de lavage de voiture, comprenant au moins un portique (4), au moins une caractéristique de forme du véhicule (2) étant enregistrée au moyen d'un dispositif d'enregistrement (3), la surface du véhicule étant balayée et enregistrée en trois dimensions au moyen d'un scanner (7), **caractérisé en ce que** le scanner (7) envoie au moins un faisceau de mesure (10) au véhicule (2) et enregistre en trois dimensions les positions dans l'espace des points de balayage ou d'impact du faisceau de mesure (10) sur la surface du véhicule.

20. Procédé selon la revendication 19, **caractérisé en ce que** le scanner (7) balaie la surface du véhicule avec au moins deux têtes de scanner (8, 9) disposées à distance au-dessus et des deux côtés à côté du véhicule (2).
